(19)

Europäisches
Patentamt
European
Patent Office
Office européen
des brevets

(11) **EP 4 683 006 A1**

(12) **EUROPEAN PATENT APPLICATION**
published in accordance with Art. 153(4) EPC

(43) Date of publication:
**21.01.2026 Bulletin 2026/04**

(21) Application number: **24771008.0**

(22) Date of filing: **15.03.2024**

(51) International Patent Classification (IPC):
*H01M 4/86* (2006.01)    *C01B 32/977* (2017.01)
*H01M 4/88* (2006.01)    *H01M 4/96* (2006.01)
*H01M 8/10* (2016.01)    *C04B 35/571* (2006.01)
*C04B 35/577* (2006.01)

(52) Cooperative Patent Classification (CPC):
**C01B 32/977; H01M 4/86; H01M 4/88; H01M 4/96;
H01M 8/10;** C04B 35/565; C04B 35/571;
Y02E 60/50

(86) International application number:
**PCT/JP2024/010264**

(87) International publication number:
**WO 2024/190906 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 JP 2023041000**

(71) Applicant: **DIC Corporation**
**Tokyo 174-8520 (JP)**

(72) Inventors:
• **GOTO Yusaku**
  **Sakura-shi, Chiba 285-8668 (JP)**
• **KATO Shinji**
  **Sakura-shi, Chiba 285-8668 (JP)**

(74) Representative: **TBK**
**Bavariaring 4-6**
**80336 München (DE)**

(54) **POROUS SILICON CARBIDE COMPOSITE MATERIAL, ELECTRODE FOR FUEL CELL, AND METHOD FOR MANUFACTURING POROUS SILICON CARBIDE COMPOSITE MATERIAL**

(57)    A porous silicon carbide composite material including silicon carbide (SiC) and a carbon material, in which the porous silicon carbide composite material has a BET specific surface area of 10 m$^2$/g or more and an electrical conductivity of 0.1 S/cm or more.

FIG. 1

STEP (A)

ADDING ORGANIC ALKOXYSILANE TO
ACIDIC AQUEOUS SOLUTION CONTAINING
SURFACTANT AND PH ADJUSTOR, AND
FURTHER ADDING CARBON MATERIAL (A)
OR ORGANIC POLYMER TO CAUSE SOL-GEL
REACTION OF ORGANIC ALKOXYSILANE, FORMING
GEL CONTAINING CARBON MATERIAL (A)
OR ORGANIC POLYMER

STEP (B)

CLEANING GEL WITH ALCOHOL

STEP (C-1)

DRYING CLEANED GEL TO FORM
POROUS SILICON CARBIDE PRECURSOR

STEP (D-1)

CALCINING POROUS SILICON CARBIDE PRECURSOR

EP 4 683 006 A1

**Description**

TECHNICAL FIELD

The present invention relates to a porous silicon carbide composite material, an electrode for a fuel cell, and a method for producing the porous silicon carbide composite material.

The present application claims a priority from Japanese Patent Application No. 2023-041000 filed on March 15, 2023 in Japan, and cites the contents thereof.

BACKGROUND ART

A fuel cell is a device which generates electric power and heat by a chemical reaction of obtaining water from hydrogen and oxygen, and there are several types of fuel cells, such as a phosphoric acid fuel cell (PAFC), a molten carbonate fuel cell (MCFC), a solid oxide fuel cell (SOFC), and a polymer electrolyte fuel cell (PEFC). Of these, the polymer electrolyte fuel cell (PEFC) has such a structure that a solid polymer electrolyte membrane has an anode (fuel electrode) formed on one side thereof and a catalyst layer constituting a cathode (air electrode) formed on another side, and a gas diffusion layer is bonded to the outside surface of each catalyst layer. The catalyst layer is composed of a catalyst in a particle form containing a precious metal, and a catalyst supporting carrier having the catalyst highly dispersed and supported on the surface of nano-sized carrier particles.

Currently, a carbon material having high specific surface area and high electrical conductivity is used as a carrier for supporting a catalyst. However, there is a serious problem in that the catalyst performance in the cathode and anode becomes poor due to corrosion of the carbon carrier and the like. For this reason, the development of a material having high specific surface area and high electrical conductivity as well as excellent durability as a substitute for carbon is strongly desired.

For example, PTL 1 discloses an electrode catalyst including (A) Group 13-doped SiC which is SiC doped with an element belonging to Group 13 (Group 3B) of the Periodic Table, (B) electrically conductive carbon particles, and (C) a precious metal supported on the surface of the Group 13-doped SiC (A). In this document, the element belonging to Group 13 for doping SiC is, for example, Al (aluminum), the amount of the doping element belonging to Group 13 in the Group 13-doped SiC (A) is 1 to 5 mol%, and the ratio of the Group 13-doped SiC (A) and the electrically conductive carbon particles (B) [(A):(B)] is 1:9 to 5:5, in terms of a weight ratio.

PTL 2 discloses a method for producing an electrically conductive silicon carbide porous material, including the oxidizing treatment step of heating a sintered material of a porous silicon carbide ceramic having electrical conductivity in an oxidizing atmosphere at a predetermined heating temperature for a predetermined heating time to form a silicon dioxide layer on the surface of silicon carbide particles, wherein electrically conductive silicon carbide porous materials having different resistivity values are produced by changing the heating temperature and/or heating time in the oxidizing treatment step.

Further, PTL 3 discloses a method for producing a regular meso-porous silicon carbide nano-composite material, including forming a precursor mixture containing a carbon precursor, a silica precursor, a surfactant, and an oil, and drying the precursor mixture, and crosslinking the carbon precursor and silica precursor to form a surfactant self-organization template and a carbon-precursor and silica-precursor meso-structure phase regulated by the template, and subjecting the precursor to heat treatment, forming a regular meso-porous silicon carbide nano-composite material.

CITATION LIST

PATENT LITERATURE

PTL 1: JP2010-149008A
PTL 2: JP2012-051748A
PTL 3: JP2015-155372A

SUMMARY OF INVENTION

TECHNICAL PROBLEM

For achieving high efficiency and high power, the electrode for use in a fuel cell needs a carrier having both high specific surface area and high electrical conductivity. As mentioned above, PTL 1 has a description about a silicon carbide composite material which contains silicon carbide particles having a precious metal supported on the surface thereof, and electrically conductive carbon particles, and thus which has electrical conductivity imparted thereto; however, there is no reference to the specific surface area of the porous silicon carbide and specific electrical conductivity, and an improvement of the material is needed.

PTL 2 has a description of an electrically conductive silicon carbide porous material having a resistivity of 3.4 to 21.7 $\Omega\cdot$cm (0.046 to 0.29 S/cm) as an electrical conductivity, but the electrical conductivity of the material is not satisfactory, and further there is no reference to the specific surface area of the porous silicon carbide composite material. Further, in PTL 2, a binder, a lubricant, and water are added to a raw material mixture of silicon carbide, silicon nitride, and graphite, and the resultant mixture is kneaded and extruded, and calcined in a non-oxidizing atmosphere to obtain a porous silicon carbide composite material, but this method cannot control the pore size, and hence various porous silicon carbide composite materials having different pore sizes and specific surface areas cannot be produced by this method.

Further, PTL 3 has a description showing that the porous silicon carbide has a desorption cumulative surface area (DCSA) of 354.7 to 950.9 $m^2/g$ ($N_2$ or Ar) and an adsorption cumulative surface area (ACSA) of 311.4 to 862.7 $m^2/g$ ($N_2$ or Ar), but there is no reference to the electrical conductivity of the porous silicon carbide. Furthermore, in PTL 3, an alkoxysilane, a carbon-containing compound, and a surfactant are mixed to synthesize a ceramic precursor, and the precursor is calcined in an inert atmosphere to obtain a porous silicon carbide composite material, but, like PTL 2, various porous silicon carbide composite materials having different pore sizes and specific surface areas cannot be produced by this method.

An object of the present invention is to provide a porous silicon carbide composite material having both high BET specific surface area and high electrical conductivity and an electrode for a fuel cell, and to provide a method for producing a porous silicon carbide composite material, which can control the pore size using an organic alkoxysilane which is of such a type that it is widely being on the market as an industrial raw material.

SOLUTION TO PROBLEM

For achieving the object, in the present invention, it has been found that a carbon material or an organic polymer, which is a carbon source, is permitted to be present in a sol-gel reaction of an aqueous solution of organic alkoxysilane conducted in the presence of a surfactant while taking care not to prevent formation of a porous gel, preparing a precursor gel, and the precursor gel is calcined, achieving production of a porous silicon carbide composite material having a nanoscale carbon material disposed in a three-dimensional structure skeleton, in which a pore structure (mesopores) in the mesoscopic region or a pore structure (macropores) in the macroscopic region has developed, and which is porous. That is, it has been found that when the porous structure of the precursor gel being produced is controlled and then a porous silicon carbide composite material is produced, the pore size and specific surface area of the porous silicon carbide composite material can be controlled. In addition, it has been found that when a polycondensation reaction of polysilsesquioxane is caused to slowly proceed while adjusting the pH, forming a precursor gel having a porous structure, the carbon material can be densely dispersed and disposed in the porous three-dimensional structure skeleton, so that a porous silicon carbide composite material having higher electrical conductivity can be obtained.

Further, it has been found that, by subjecting the porous silicon carbide composite material to heating treatment in an oxygen gas atmosphere, a silicon oxide can be formed on the surface of the silicon carbide, so that a site of the silicon carbide which is likely to suffer deterioration is oxidized in advance, and thus the porous silicon carbide composite material is stabilized, and there can be provided the porous silicon carbide composite material which can exhibit high electrical conductivity while maintaining large BET specific surface area.

Specifically, the present invention provides the following construction.

[1] A porous silicon carbide composite material including silicon carbide (SiC) and a carbon material, the porous silicon carbide composite material having a BET specific surface area of 10 $m^2/g$ or more and having an electrical conductivity of 0.1 S/cm or more.

[2] A porous silicon carbide composite material including:

a porous silicon carbide composite material including silicon carbide (SiC) and a carbon material (A), and a carbon material (B),
the porous silicon carbide composite material having a BET specific surface area of 10 $m^2/g$ or more and having an electrical conductivity of 0.1 S/cm or more.

[3] The porous silicon carbide composite material according to item [1] or [2] above, which has a total pore volume of 0.3 $cm^3/g$ or more.

[4] The porous silicon carbide composite material according to item [1] or [2] above, which has a pore size of 10 to 1,000 nm.

[5] The porous silicon carbide composite material according to any one of items [1] to [3] above, in which the mass ratio of silicon (Si) to carbon (C) contained in the porous silicon carbide composite material ([Si]/[C]) is 0.4/1.0 to 2.0/1.0.

[6] The porous silicon carbide composite material according to item [2] above, in which the mass ratio of silicon (Si) to carbon (C) contained in the porous silicon carbide composite material ([Si]/[C]) is 0.15/1.0 to 2.0/1.0.

[7] The porous silicon carbide composite material according to any one of items [1] to [6] above, in which the content of the carbon material (A) in the porous silicon carbide composite material is 5 to 50 % by mass.

[8] The porous silicon carbide composite material according to item [2] above, in which the total content of the carbon materials (A) and (B) in the porous silicon carbide composite material is 5 to 50% by mass.

[9] The porous silicon carbide composite material according to any one of items [1] to [5] above, in which the carbon material (A) and/or (B) contains one member or two or more members selected from carbon black, a carbon nanofiber, a carbon nanotube, and low-crystalline nanocarbon.

[10] The porous silicon carbide composite material according to any one of items [1] to [9] above, in which the particle diameter ratio of the average diameter of primary particles of the silicon carbide (SiC) and the average diameter of the carbon material is 10:1 to 1:5.

[11] The porous silicon carbide composite material according to any one of items [1] to [10] above, in which a domain containing a silicon oxide formed by oxidation of the silicon carbide (SiC) is formed in part of the composite material.

[12] The porous silicon carbide composite material according to item [11] above, in which the domain containing a silicon oxide is formed on the surface of the silicon carbide (SiC) in the porous silicon carbide composite material.

[13] The porous silicon carbide composite material according to any one of items [1] to [12] above, in which the mass ratio of silicon (Si) to oxygen (O) contained in the porous silicon carbide composite material ([Si]/[O]) is 1/0.1 to 1/0.001.

[14] An electrode for a fuel cell, the electrode having a layer containing the porous silicon carbide composite material according to any one of items [1] to [13] above.

[15] A method for producing a porous silicon carbide composite material, including the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor; and
(D-1) calcining the porous silicon carbide precursor to obtain a porous silicon carbide composite material including silicon carbide (SiC) and the carbon material (A).

[16] A method for producing a porous silicon carbide composite material, including the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor; and
(D-1) calcining the porous silicon carbide precursor to obtain a composite material including silicon carbide (SiC) and the carbon material (A),
the method further including any of the steps shown in the following items (1) and (2):

(1) step (C-2) of further incorporating a carbon material (B) into the porous silicon carbide precursor obtained in the step (C-1); and
(2) step (D-2) of further incorporating a carbon material (B) into the porous silicon carbide composite material obtained in the step (D-1).

[17] The method for producing a porous silicon carbide composite material according to item [15] or [16] above, which further includes, after the step (D-1) or (D-2), step (E-1) of subjecting the composite material to heat treatment in the presence of oxygen to form a domain containing a silicon oxide in part of the composite material.

[18] The method for producing a porous silicon carbide composite material according to item [15] or [16] above, in which, in the step (D-1), the porous silicon carbide precursor is calcined at 1,300 to 3,000°C.

[19] The method for producing a porous silicon carbide composite material according to any one of items [15] to [18] above, in which the organic alkoxysilane is represented by the following formula (1) or (2):

$$R^1\text{-}SiR^2{}_x(OR^3)_{3-x} \qquad (1)$$

wherein $R^1$ is any one group selected from a methyl group, an ethyl group, a vinyl group, and a phenyl group, $R^2$ represents a methyl group, $R^3$ represents a methyl group or an ethyl group, and integer x is 0 or 1,

$$R^4\text{-}(SiR^5_y(OR^6)_{3-y})_2 \qquad (2)$$

wherein $R^4$ includes any one group selected from a methylene group, an ethylene group, a hexylene group, a vinylene group, a phenylene group, and a biphenylene group, $R^5$ represents a methyl group, $R^6$ represents a methyl group or an ethyl group, and integer y is 0 or 1.

[20] The method for producing a porous silicon carbide composite material according to any one of items [15] to [19] above, in which the mass ratio of the carbon material (A) or organic polymer and the organic alkoxysilane is 2.5 to 50:97.5 to 50.

[21] The method for producing a porous silicon carbide composite material according to any one of items [15] to [20] above, in which the carbon material (A) and/or (B) contains one member or two or more members selected from carbon black, a carbon nanofiber, a carbon nanotube, and low-crystalline nanocarbon.

[22] The method for producing a porous silicon carbide composite material according to any one of items [15] to [21] above, in which the organic polymer contains one member or two or more members selected from a phenolic resin, polystyrene, and polydivinylbenzene.

ADVANTAGEOUS EFFECTS OF INVENTION

In the present invention, there can be provided a porous silicon carbide composite material having both high BET specific surface area and high electrical conductivity and an electrode for a fuel cell. Further, there can be provided a method for producing a porous silicon carbide composite material, which can control the pore size using an organic alkoxysilane which is of such a type that it is widely being on the market as an industrial raw material.

BRIEF DESCRIPTION OF DRAWINGS

[FIG. 1] FIG. 1 is a flow chart explaining an example of the method for producing a porous silicon carbide composite material according to an embodiment of the present invention.

[FIG. 2] FIG. 2 is a transmission electron microscope image of the porous silicon carbide composite material in Example 1.

[FIG. 3] FIG. 3 is a diagram showing an X-ray diffraction pattern of the porous silicon carbide composite material in Example 1.

DESCRIPTION OF EMBODIMENTS

<Construction of the porous silicon carbide composite material>

The porous silicon carbide composite material according to the present embodiment includes any one of the below-described porous silicon carbide composite material (I) and porous silicon carbide composite material (II).

The porous silicon carbide composite material (I) includes silicon carbide (SiC) and a carbon material (A), in which the porous silicon carbide composite material has a BET specific surface area of 10 $m^2$/g or more and an electrical conductivity of 0.1 S/cm or more.

The porous silicon carbide composite material (II) includes: a porous silicon carbide composite material including silicon carbide (SiC) and a carbon material (A), and

a carbon material (B),
in which the porous silicon carbide composite material has a BET specific surface area of 10 $m^2$/g or more and an electrical conductivity of 0.1 S/cm or more.

With respect to the form of the porous silicon carbide composite material (I) or (II), there is no particular limitation, but the porous silicon carbide composite material is, for example, in a powder form, a particle form, a fiber form, or a needle-like form, especially preferably in a powder form or a particle form.

When the porous silicon carbide composite material (I) or (II) is in a powder form or a particle form, there is no particular limitation with respect to the particle diameter of the porous silicon carbide composite material (I) or (II), but the particle diameter, in terms of a particle diameter $D_{50}$ which is a 50% cumulative particle size in volume-based cumulative particle size distribution, is preferably, for example, 0.05 to 50 $\mu$m, more preferably 0.1 to 10 $\mu$m, further preferably 0.1 to 2 $\mu$m.

The particle diameter $D_{50}$ of the porous silicon carbide composite material (I) or (II) means a value as measured in accordance with JIS Z8825-1:2013, for example, means a particle diameter $D_{50}$ as measured using a laser diffraction particle size distribution measurement apparatus (SALD-7000, manufactured by Shimadzu Corporation).

The porous silicon carbide composite material (I) or (II) of the present embodiment has a BET specific surface area of 10 $m^2$/g or more, preferably 20 $m^2$/g or more, more preferably 50 $m^2$/g or more. Further, the BET specific surface area of the porous silicon carbide composite material may be 300 $m^2$/g or less. When the BET specific surface area of the porous silicon carbide composite material is 10 $m^2$/g or more, the amount of the catalyst particles supported on the surface of the carrier is satisfactory, so that, when the porous silicon carbide composite material (I) or (II) is used in an electrode for a fuel cell, desired properties, such as power output and efficiency, can be obtained. On the other hand, when the BET specific surface area of the porous silicon carbide composite material is 300 $m^2$/g or less, the ratio of the mesopores suitable for supporting a catalyst is increased, making it possible to further improve the utilization of the catalyst particles.

The porous silicon carbide composite material (I) or (II) preferably has a total pore volume of 0.3 $cm^3$/g or more, more preferably 0.5 $cm^3$/g or more, especially preferably 0.6 $cm^3$/g or more. When the total pore volume of the porous silicon carbide composite material (I) or (II) is 0.3 $cm^3$/g or more, the reacting gas and electrolyte can easily flow through the catalyst layer, making it possible to improve the catalytic efficiency.

The porous silicon carbide composite material (I) or (II) preferably has a pore size of 10 to 1,000 nm, more preferably 20 to 500 nm, especially preferably 50 to 300 nm. When the pore size of the porous silicon carbide composite material (I) or (II) is 10 to 1,000 nm, the reacting gas and electrolyte can easily flow through the catalyst layer, making it possible to improve the catalytic efficiency. Particularly, when the pore size of the porous silicon carbide composite material (I) or (II) is 10 nm or more, supply of the reacting gas and electrolyte to the supported catalyst particles is stabilized, making it possible to suppress a reduction of the utilization of the catalyst particles.

The BET specific surface area, total pore volume, and pore size of the porous silicon carbide composite material (I) or (II) can be determined as values measured by a gas adsorption method, which mean values determined by, for example, using an isovolumetric method, while changing the relative pressure in the adsorption isotherm, causing adsorption of a non-corrosive gas, such as nitrogen or argon, and making a calculation from the adsorption amount and condensation of the non-corrosive gas.

In the porous silicon carbide constituting the porous silicon carbide composite material (I) or (II), a plurality of micropores are individually formed due to the three-dimensional skeleton structure, or a plurality of micropores are formed in such a state that part of or all of the micropores are connected together.

The porous silicon carbide composite material (I) or (II) contains carbon constituting the three-dimensional skeleton structure of the porous silicon carbide (SiC) as a carrier, and, as carbon other than the carbon constituting the three-dimensional skeleton structure, a carbon material (A) supported on the porous silicon carbide (I) or (II).

In the present description, the porous silicon carbide indicates that silicon carbide is composed of spaces of a three-dimensional network structure in which silicon carbide is connected.

[Carbon material (A)]

The carbon material (A) is contained in each of the electrode catalysts (I) and (II). With respect to the carbon material (A) held in the three-dimensional skeleton structure of the porous silicon carbide, but the carbon material (A) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (A) is preferably carbon black.

When the carbon material (A) contains carbon black, primary particles of the carbon material (A) preferably have an average diameter of 10 to 200 nm, more preferably 20 to 100 nm, further preferably 30 to 50 nm. When the average diameter of primary particles of the carbon material (A) is 10 to 200 nm, excellent electrical conductivity can be achieved.

When the carbon material (A) contains a carbon nanofiber or a carbon nanotube, the carbon material (A) preferably has an average diameter of 10 to 200 nm, and further the carbon material (A) preferably has a length of 1 to 20 $\mu$m.

The form and size of the carbon material (A) held in the porous silicon carbide composite material (I) can be actually measured from, for example, observation using a transmission electron microscope or a scanning electron microscope. Further, the average diameter of the primary particles can be determined from, for example, a microscope image by using software for image analysis particle size distribution measurement.

The content of the carbon material (A) in the porous silicon carbide (I) is preferably 5 to 50% by mass, more preferably 8 to 45% by mass, further preferably 10 to 40% by mass. When the content of the carbon material (A) in the porous silicon carbide composite material (I) is 5 to 50% by mass, high electrical conductivity is achieved and further corrosion of carbon and the like are suppressed, making it possible to improve the durability in the catalyst cycle.

[Carbon material (B)]

The carbon material (B) is contained in the porous silicon carbide composite material (II). With respect to the carbon material (B), there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black. Further, the carbon material (B) may be the same as the carbon material (A).

When the carbon material (B) contains carbon black, primary particles of the carbon material (B) preferably have an average diameter of 10 to 200 nm, more preferably 20 to 100 nm, further preferably 30 to 50 nm. When the average diameter of primary particles of the carbon material is 10 to 200 nm, excellent electrical conductivity can be achieved.

When the carbon material (B) contains a carbon nanofiber or a carbon nanotube, the carbon material (B) preferably has an average diameter of 10 to 200 nm, and further the carbon material (B) preferably has a length of 1 to 20 $\mu$m.

The content of the carbon material (B) in the porous silicon carbide composite material (II) is preferably 1 to 20% by mass, more preferably 3 to 15% by mass, further preferably 4 to 10% by mass. When the content of the carbon material (B) in the porous silicon carbide composite material is 1 to 20% by mass, high electrical conductivity is achieved and further corrosion of carbon and the like are suppressed, making it possible to improve the durability in the catalyst cycle.

The form and size of the carbon material (B) held in the porous silicon carbide composite material (II) can be actually measured from, for example, observation using a transmission electron microscope or a scanning electron microscope. Further, the average diameter of the primary particles can be determined from, for example, a microscope image by using software for image analysis particle size distribution measurement.

The total content of the carbon materials (A) and (B) in the porous silicon carbide composite material (II) is preferably 5 to 50% by mass, more preferably 8 to 45% by mass, further preferably 10 to 40% by mass. When the total content of the carbon materials (A) and (B) in the electrode catalyst (II) is 5 to 50% by mass, high electrical conductivity is achieved and further corrosion of carbon and the like are suppressed, making it possible to improve the durability in the catalyst cycle.

[Silicon carbide]

Primary particles of the silicon carbide in the porous silicon carbide composite material (I) or (II) preferably have an average diameter of 20 to 800 nm, more preferably 30 to 500 nm, further preferably 40 to 300 nm. When the average diameter of primary particles of the silicon carbide is 20 to 800 nm, excellent voids can be advantageously obtained when an electrode is produced using the silicon carbide.

The particle diameter of the silicon carbide in the porous silicon carbide composite material (I) or (II) can be actually measured from, for example, observation using a transmission electron microscope or a scanning electron microscope. Further, the average diameter of the primary particles can be determined from, for example, a microscope image by using software for image analysis particle size distribution measurement.

With respect to the ratio of the average diameter of primary particles of the silicon carbide and the average diameter of the carbon material (A) (SiC:carbon material (A)), there is no particular limitation, but the ratio is preferably 10:1 to 1:5, more preferably 5:1 to 1:3, especially preferably 2:1 to 1:2. When the ratio is in the above range, an electrode layer containing the obtained porous silicon carbide composite material can exhibit more excellent mass transfer.

With respect to the ratio of the average diameter of primary particles of the silicon carbide and the average diameter of the carbon material (B) (SiC:carbon material (B)), there is no particular limitation, but the ratio is preferably 10:1 to 1:5, more preferably 5:1 to 1:3, especially preferably 2:1 to 1:2. When the ratio is in the above range, an electrode layer containing the obtained porous silicon carbide composite material can exhibit more excellent mass transfer.

[Silicon oxide]

In the porous silicon carbide composite material (I) or (II) of the present embodiment, a domain containing a silicon oxide formed by oxidation of the silicon carbide (SiC) may be formed in part of the composite material. Examples of silicon oxides include silicon monoxide (SiO) and silicon dioxide ($SiO_2$). With respect to the form of the domain, there is no particular limitation, but, for example, the domain is in the form of a crystal or in an aggregate form of crystals. The domain containing a silicon oxide is dispersed and disposed on the surface of the porous silicon carbide composite material (I) or (II). Further, it is preferred that the domain containing a silicon oxide is formed on the surface of the silicon carbide (SiC) in the porous silicon carbide composite material (I) or (II). This can suppress oxidation of the surface of the silicon carbide.

In the porous silicon carbide composite material (I), the mass ratio of silicon (Si) to carbon (C) contained in the porous silicon carbide composite material ([Si]/[C]) is preferably 0.4/1.0 to 2.0/1.0, more preferably 0.5/1.0 to 1.8/1.0, further preferably 0.7/1.0 to 1.7/1.0.

In the porous silicon carbide composite material (II), the [Si]/[C] is preferably 0.15/1.0 to 2.0/1.0, more preferably 0.2/1.0 to 1.8/1.0, further preferably 0.3/1.0 to 1.6/1.0.

When the mass ratio of silicon (Si) to carbon (C) ([Si]/[C]) is 0.4/1.0 to 2.0/1.0 or 0.15/1.0 to 2.0/1.0, high electrical conductivity is achieved and further corrosion of carbon and the like are suppressed, making it possible to improve the durability in the catalyst cycle. The carbon (C) in the mass ratio means a total of carbon constituting the three-dimensional skeleton structure of the porous silicon carbide and the carbon material (A) and carbon material (B) contained in the porous silicon carbide composite material.

In the porous silicon carbide composite material (I) or (II), the mass ratio of silicon (Si) to oxygen (O) ([Si]/[O]) is preferably 1/0.1 to 1/0.001, more preferably 1/0.1 to 1/0.005, further preferably 1/0.01 to 1/0.005. When the mass ratio of silicon (Si) ([Si]/[O]) is 1/0.1 to 1/0.001, a site of the silicon carbide which is likely to suffer deterioration is oxidized in advance, so that the porous silicon carbide composite material can be improved in stability.

The content of carbon (C) in the porous silicon carbide composite material (I) or (II) means a value measured by, for example, a combination of specifying a proportion of the contained elements by elemental analysis, and a thermogravimetric differential thermal analysis (TG-DTA) in air.

The content of silicon (Si) in the porous silicon carbide composite material (I) or (II) means a value measured by, for example, specifying a proportion of the contained elements by elemental analysis.

[Properties of the porous silicon carbide composite material]

The porous silicon carbide composite material (I) or (II) of the present embodiment has an electrical conductivity of 0.1 S/cm or more, preferably 1 S/cm or more, more preferably 5 S/cm or more, further preferably 10 S/cm or more. Further, the electrical conductivity of the porous silicon carbide composite material may be 100 S/cm or less, may be 70 S/cm or less, and may be 50 S/cm or less. When the electrical conductivity of the porous silicon carbide is higher, excellent porous silicon carbide composite material for fuel cell can be provided, but, when the amount of the held carbon material which contributes to an improvement of the electrical conductivity is too high, oxidative corrosion of the carbon component is likely to proceed in the catalyst cycle, so that the durability becomes poor.

<Method for producing the porous silicon carbide composite material>

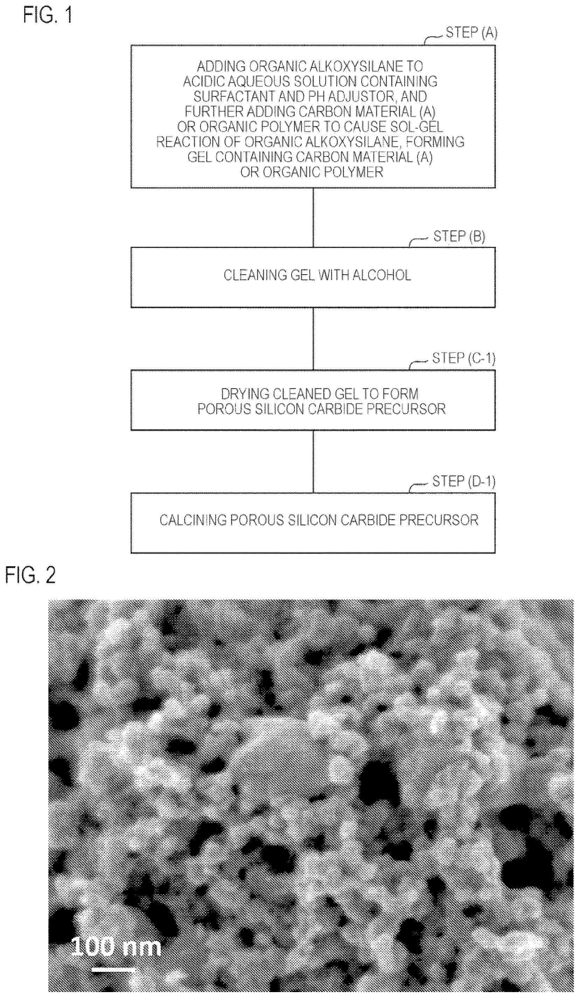

The method for producing the porous silicon carbide composite material (I) of the present embodiment includes, as shown in FIG. 1, the gel formation step (step (A)), cleaning step (step (B)), porous silicon carbide precursor formation step (step (C-1)), and calcination step (step (D-1)).

Further, the method for producing the porous silicon carbide composite material (II) of the present embodiment includes the gel formation step (step (A)), cleaning step (step (B)), porous silicon carbide precursor formation step (step (C-1)), and calcination step (step (D-1)), and further includes any of the steps shown in the following items (1) and (2):

(1) step (C-2) of further incorporating a carbon material into the porous silicon carbide precursor obtained in the step (C-1); and
(2) step (D-2) of further incorporating a carbon material into the porous silicon carbide composite material obtained in the step (D-1).

An additional step other than the above-mentioned steps may be provided before or after the individual step as long as the porous silicon carbide composite material of the present embodiment can be obtained. By employing the below-described production method, a porous silicon carbide composite material having a desired mass ratio ([Si]/[C]) can be obtained by conducting calcination once.

[Step (A)]

In the step (A), for example, an organic alkoxysilane is added to an acidic aqueous solution containing a surfactant and a pH adjustor, and a carbon material (A) or an organic polymer is further added to cause a sol-gel reaction of the organic alkoxysilane, forming a gel containing the carbon material (A) or the organic polymer. For example, hydrolyzation of the hydrolyzable organic alkoxysilane forms a hydrolyzate, and further the reaction system is increased in pH to cause a polycondensation reaction of the organic alkoxysilane, obtaining a polysilsesquioxane. The pH suitable for the polycondensation reaction varies depending on the isoelectric point of the organic alkoxysilane used, but, when the pH is too high, the reaction efficiency is likely to become poor, making it difficult to form a gel. The sol-gel reaction is preferably conducted at 25 to 80°C, more preferably at 30 to 70°C, further preferably at 40 to 60°C. Thus, a polysilsesquioxane can be obtained in the form of a wet gel containing therein water as a solvent. Further, by causing a polycondensation reaction of polysilsesquioxane to proceed while gradually increasing the pH using a pH adjustor, the carbon material or organic polymer can be more densely dispersed in the porous structure of the precursor gel, so that the dispersibility of the carbon material in the three-dimensional structure skeleton of the porous silicon carbide composite material can be further improved.

The content of the surfactant in the acidic aqueous solution is preferably 0.1 to 50% by mass, more preferably 0.5 to 35% by mass, further preferably 2 to 15% by mass.

With respect to the surfactant, there is no particular limitation, but, for example, there can be mentioned a nonionic surfactant and/or a cationic surfactant. By appropriately selecting any one or both of a nonionic surfactant and a cationic surfactant and using it or them as the surfactant, a desired BET specific surface area and pore size can be obtained. Examples of nonionic surfactants include those of a polyethylene glycol type (an ether type and an ester-ether type) and those of a polyhydric alcohol type. Examples of polyethylene glycol-type nonionic surfactants include those of a Pluronic (registered trademark) type. Examples of cationic surfactants include those of an amine salt type and those of a quaternary ammonium salt type. When the content of the surfactant in the acidic aqueous solution is 0.1 to 50% by mass, a porous polysilsesquioxane gel having such large BET specific surface area that mesopores or macropores have developed can be formed.

The content of the pH adjustor in the acidic aqueous solution is preferably 5 to 50% by mass, more preferably 5.5 to 35% by mass, further preferably 6 to 23% by mass. When the content of the pH adjustor in the acidic aqueous solution is 5 to 50% by mass, a porous polysilsesquioxane gel having high skeletal strength and flexibility can be formed.

With respect to the pH adjustor, there is no particular limitation, but, for example, there can be mentioned a substance containing any one selected from urea, ammonia, and sodium hydroxide.

With respect to the acidic aqueous solution, there is no particular limitation, but there can be mentioned an aqueous solution of hydrochloric acid, nitric acid, acetic acid, or the like.

The organic alkoxysilane is preferably represented by the formula (1) or (2) below. By using the organic alkoxysilane represented by the formula (1) or (2) below, a porous silicon carbide having a desired three-dimensional skeleton structure can be easily formed.

$$R^1\text{-}SiR^2_x(OR^3)_{3-x} \qquad (1)$$

(R$^1$ is any one group selected from a methyl group, an ethyl group, a vinyl group, and a phenyl group, R$^2$ represents a methyl group, R$^3$ represents a methyl group or an ethyl group, and integer x is 0 or 1)

$$R^4\text{-}(SiR^5_y(OR^6)_{3-y})_2 \qquad (2)$$

(R$^4$ includes any one group selected from a methylene group, an ethylene group, a hexylene group, a vinylene group, a phenylene group, and a biphenylene group, R$^5$ represents a methyl group, R$^6$ represents a methyl group or an ethyl group, and integer y is 0 or 1)

Specific examples of organic alkoxysilanes represented by the formula (1) above include methyltrimethoxysilane, methyltriethoxysilane, dimethyldimethoxysilane, ethyltrimethoxysilane, ethyltriethoxysilane, methylethyldimethoxysilane, vinyltrimethoxysilane, vinyltriethoxysilane, methylvinyldimethoxysilane, phenyltrimethoxysilane, phenyltriethoxysilane, and methylphenyldimethoxysilane. Further, specific examples of organic alkoxysilanes represented by the formula (2) above include bis(trimethoxysilyl)methane, bis(triethoxysilyl)methane, bis(methyldimethoxysilyl)methane, bis(methyldiethoxysilyl)methane, 1,2-bis(trimethoxysilyl)ethane, 1,2-bis(triethoxysilyl)ethane, 1,2-bis(methyldimethoxysilyl)ethane, 1,2-bis(methyldiethoxysilyl)ethane, 1,6-bis(trimethoxysilyl)hexane, 1,6-bis(triethoxysilyl)hexane, 1,6-bis(methyldimethoxysilyl)hexane, 1,6-bis(methyldiethoxysilyl)hexane, 1,2-bis(trimethoxysilyl)ethene, 1,2-bis(triethoxysilyl)ethene, 1,2-bis(methyldimethoxysilyl)ethene, 1,2-bis(methyldiethoxysilyl)ethene, 1,4-bis(trimethoxysilyl)benzene, 1,4-bis(triethoxysilyl)benzene, 1,4-bis(methyldimethoxysilyl)benzene, 1,4-bis(methyldiethoxysilyl)benzene, 4,4'-bis(trimethoxysilyl)biphenyl, 4,4'-bis(triethoxysilyl)biphenyl, 4,4'-bis(methyldimethoxysilyl)biphenyl, and 4,4'-bis(methyldiethoxysilyl)biphenyl. With respect to the above-mentioned ethene derivatives, there are cis/trans geometrical isomers, but any of the isomers can be used. With respect to the organic alkoxysilane used, a single organic alkoxysilane or two or more organic alkoxysilanes may be used.

In the step (A), a carbon material (A) or an organic polymer is further added to the acidic aqueous solution, forming a gel containing the carbon material (A) or the organic polymer. The carbon material (A) or organic polymer is added during a sol-gel reaction of the alkoxysilane, and therefore, after the precursor formed in the step (C) is calcined in the step (D), the nanoscale carbon material (A) can be disposed in a porous, three-dimensional structure skeleton, making it possible to impart excellent electrical conductivity to the porous silicon carbide which is inherently an insulator or a semiconductor. The organic polymer undergoes pyrolysis due to calcination conducted in the step (D) to form low-crystalline nanocarbon which is held in the porous silicon carbide, so that electrical conductivity can be imparted to the porous silicon carbide.

In the step (A), it is preferred that the carbon material (A) or organic polymer is added to the acidic aqueous solution so that the mass ratio of the carbon material (A) or organic polymer and the organic alkoxysilane becomes 2.5 to 50:97.5 to 50. Further, the mass ratio of the carbon material (A) or organic polymer and the organic alkoxysilane is more preferably 3 to 30:70 to 97, further preferably 5 to 20:80 to 95. When the mass ratio of the carbon material (A) or organic polymer and the organic alkoxysilane is in the above range, both larger BET specific surface area and higher electrical conductivity can be achieved. When the amount of the carbon material (A) or organic polymer added is equivalent to or smaller than the amount of the organic alkoxysilane added, separation from the sol-gel reaction system can be suppressed, promoting formation of a gel made of polysilsesquioxane.

With respect to the carbon material (A), there is no particular limitation, but the carbon material (A) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (A) is preferably carbon black.

With respect to the organic polymer, there is no particular limitation, but, for example, the organic polymer can contain one member or two or more members selected from a phenolic resin, polystyrene, and polydivinylbenzene.

[Step (B)]

In the step (B), the gel obtained in the step (A) above is cleaned with an alcohol. With respect to the alcohol used for cleaning, there is no particular limitation, but, for example, there can be mentioned methanol, ethanol, 1-propanol, and 2-propanol. By cleaning with an alcohol, the unnecessary surfactant is removed from the acidic aqueous solution, and further water in the acidic aqueous solution can be replaced by the alcohol. After cleaning with the alcohol, further the alcohol may be replaced by a hydrocarbon solvent, such as hexane or heptane. In the present step (B), water which is a high surface-tension solvent is replaced by an alcohol or hydrocarbon solvent which is a low surface-tension solvent, and, in the below-mentioned step (C) which is the drying step at ordinary room temperature under atmospheric pressure, shrinkage of the network can be suppressed, facilitating formation of a porous gel structure.

[Step (C-1)]

In the step (C-1), the cleaned gel is dried to form a porous silicon carbide precursor. Examples of drying methods in the step (C-1) include a method in which the gel is subjected to supercritical drying using carbon dioxide at 80°C under 14 MPa, a method in which the gel is dried at room temperature under atmospheric pressure, and a method in which the gel is subjected to vacuum drying at 20 to 80°C. Of these, preferred is a method in which the gel is dried at room temperature under atmospheric pressure in view of the low production cost and obtaining a porous silicon carbide precursor having such high density that mesopores have developed when a polysilsesquioxane having high skeletal strength and flexibility is formed.

[Step (C-2)]

The method for producing the porous silicon carbide composite material (II) may further include the step (C-2). In the step (C-2), a carbon material (B) is incorporated into the porous silicon carbide precursor obtained in the step (C-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black.

The carbon material (B) used in the step (C-2) and the carbon material (A) used in the step (A) may be the same or different, but are preferably the same from the viewpoint of the production cost.

The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the porous silicon carbide composite material (II) obtained after calcination becomes 0.4/1.0 to 2.0/1.0.

[Step (D-1)]

In the step (D-1), the porous silicon carbide precursor containing the carbon material (A) or organic polymer is calcined to obtain a composite material including silicon carbide (SiC) and the carbon material. In this step, calcination supplies carbon atoms from the organic group of the polysilsesquioxane and causes a carbon thermal reduction reaction to form a silicon carbide skeleton, and, on the other hand, carbon atoms are also supplied to the skeleton from the nanoscale carbon material (A) or organic polymer dispersed in the gel. The organic polymer undergoes pyrolysis due to calcination to form low-crystalline nanocarbon which is held in the porous silicon carbide.

The calcination can be conducted by a method which is known and commonly used, and is not particularly limited, but, for example, calcination is conducted by increasing the temperature by 2.5°C per minute in an inert gas atmosphere and maintaining the highest temperature in the temperature increase for a predetermined time. The highest temperature for calcination is preferably 1,300 to 3,000°C, further preferably 1,350 to 2,500°C, especially preferably 1,400 to 2,000°C. The time of maintaining the highest temperature may be appropriately selected using an effective time for obtaining the porous silicon carbide composite material as a yardstick, and, as an example, the time is preferably 5 minutes to 16 hours, further preferably 10 minutes to 10 hours, especially preferably 30 minutes to 3 hours. The calcination may be conducted in two or more stages. Specifically, on the first stage, calcination is conducted at a temperature lower than the highest temperature for a predetermined time, and then the temperature is increased and calcination can be conducted at that temperature. The calcination may be calcination under atmospheric pressure.

Examples of inert gases include nitrogen, helium, and argon. The inert gas may contain a reducing gas, such as hydrogen gas.

The calcination can be conducted using a carbonization furnace of a fixed bed or fluidized bed system, and, with respect to the heating system and type of the carbonization furnace, there is no particular limitation as long as it is a furnace having a function such that the temperature can be increased to a predetermined temperature. Examples of carbonization furnaces include a Riedhammer furnace, a tunnel furnace, and a single furnace.

In the present step (D-1), the carbon material (A) or organic polymer is further mixed into the porous silicon carbide precursor, and the resultant mixture can be calcined. When the organic polymer is mixed into the porous silicon carbide precursor in the step (D-1), the organic polymer undergoes pyrolysis due to calcination like in the case where the organic polymer is mixed in the step (A), forming low-crystalline nanocarbon which is held in the porous silicon carbide.

[Step (D-2)]

The method for producing the porous silicon carbide composite material (II) may further include the step (D-2). In the step (D-2), a carbon material (B) is incorporated into the porous silicon carbide composite material obtained in the step (D-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black.

The carbon material (B) used in the step (D-2) and the carbon material (A) used in the step (A) may be the same or different, but are preferably the same from the viewpoint of the production cost.

The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the porous silicon carbide composite material (II) obtained after calcination becomes 0.15/1.0 to 2.0/1.0.

The method for producing the porous silicon carbide composite material (II) may have any one of the steps (C-2) and (D-2), but, from the viewpoint of the performance of the obtained porous silicon carbide composite material (II), the method preferably has the step (D-2). By virtue of having the step (D-2), the electrical conductivity can be advantageously improved while maintaining the durability of the obtained porous silicon carbide composite material (II).

[Step (E-1)]

The method for producing the porous silicon carbide composite material (I) or (II) may further include the step (E-1). In the step (E-1), the composite material is subjected to heat treatment in an oxygen gas atmosphere to form a domain containing a silicon oxide in part of the composite material. The heat treatment in the present step can be conducted by a method which is known and commonly used under conditions which are known and commonly used, and is not particularly limited as long as the treatment is made in an oxygen gas atmosphere, but, for example, the heat treatment is conducted in air by increasing the temperature by 10°C per minute and maintaining the highest temperature in the temperature increase for a predetermined time. The temperature for the heat treatment is preferably 500 to 800°C, more preferably 550 to 750°C, further preferably 600 to 700°C. The time of maintaining the temperature for the heat treatment may be appropriately selected using an effective time for forming a domain containing a silicon oxide in part of the porous silicon carbide composite material as a yardstick, and, as an example, the time is preferably 15 minutes to 4 hours, more preferably 20 minutes to 3 hours, further preferably 30 minutes to 2 hours. In the present step, part of silicon in the porous silicon carbide composite material is oxidized and changed to a silicon oxide, so that a domain containing the silicon oxide is formed on the surface of the silicon carbide in the porous silicon carbide composite material. Examples of silicon oxides include silicon monoxide (SiO) and silicon dioxide ($SiO_2$). With respect to the form of the domain, there is no particular limitation, but, for example, the domain may be noncrystalline.

The present step has an effect that, as compared to the porous silicon carbide composite material which has not been subjected to heat treatment in an oxygen gas atmosphere, the porous silicon carbide composite material obtained in the present step can be further increased in the specific surface area while maintaining the appropriate electrical conductivity. Further, a site of the silicon carbide which is likely to suffer deterioration is oxidized in advance, so that the porous silicon carbide composite material can be improved in stability.

[Step (E-2)]

The method for producing the porous silicon carbide composite material (I) or (II) may further include the step (E-2). In the step (E-2), a carbon material (B) is incorporated into the mixture obtained in the step (E-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black.

The carbon material (B) used in the step (E-2) and the carbon material (A) used in the step (A) may be the same or different, but are preferably the same from the viewpoint of the production cost.

The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the electrode catalyst obtained after calcination becomes 0.15/1.0 to 2.0/1.0.

When the method has the step (E-2), the steps (C-2) and (D-2) can be omitted.

EXAMPLES

Hereinbelow, the Examples of the present invention will be described. The following Examples should not be construed as limiting the scope of the present invention. The figures shown in the tables below mean those in terms of "part(s) by weight" unless otherwise specified.

(Example 1)

[Synthesis of a porous silicon carbide composite material]

Six grams of a 5 mM aqueous solution of acetic acid (manufactured by Kanto Chemical Co., Inc.), 0.8 g of Pluronic (registered trademark) F-127 (manufactured by BASF AG), 0.5 g of urea (manufactured by Kanto Chemical Co., Inc.), and 0.24 g of ketjen black (product name "ECP-600JD", manufactured by Lion Specialty Chemicals Co., Ltd.) were placed in a vial and stirred at room temperature for 10 minutes. Five grams of methyltrimethoxysilane (manufactured by Kanto Chemical Co., Inc.) was added to the vial, and the resultant mixture was stirred at room temperature for 30 minutes. Then, the mixture was subjected to reaction at 60°C for 4 days, obtaining a wet gel. The obtained wet gel was cleaned with methanol (manufactured by Kanto Chemical Co., Inc.), and dried at room temperature under atmospheric pressure for 3 days, and then further dried at 80°C under atmospheric pressure for 6 hours, obtaining 3.5 g of a porous silicon carbide precursor. One gram of the obtained porous silicon carbide precursor and 0.4 g of ketjen black (ECP) were mixed and then charged into a tube furnace, and subjected to calcination in an argon gas atmosphere under conditions such that the temperature was increased to 1,500°C at a temperature increase rate of 2.5°C/minute and that temperature was maintained for 2 hours, obtaining a porous silicon carbide composite material 1.

(Example 2)

A porous silicon carbide composite material 2 was obtained in substantially the same manner as in Example 1 except that the amount of the ketjen black (ECP) mixed to 1 g of the obtained porous silicon carbide precursor was changed to 0.6 g.

(Example 3)

The porous silicon carbide composite material 1 obtained in Example 1 was subjected to heating treatment in air at 600°C for 2 hours under conditions such that an air flow was shut out, obtaining a porous silicon carbide composite material 3.

(Example 4)

A porous silicon carbide composite material 4 was obtained in substantially the same manner as in Example 1 except that a porous silicon carbide precursor was synthesized using 2.5 g of methyltrimethoxysilane (manufactured by Kanto Chemical Co., Inc.) and 2.5 g of phenyltrimethoxysilane (manufactured by Kanto Chemical Co., Inc.).

(Example 5)

A porous silicon carbide composite material 5 was obtained in substantially the same manner as in Example 1 except that a porous silicon carbide precursor was synthesized using 2.5 g of methyltrimethoxysilane (manufactured by Kanto Chemical Co., Inc.) and 2.5 g of vinyltrimethoxysilane (manufactured by Kanto Chemical Co., Inc.).

(Example 6)

A porous silicon carbide composite material 6 was obtained in substantially the same manner as in Example 1 except that the ketjen black (ECP-600JD) as a raw material and the ketjen black (ECP) mixed to the porous silicon carbide precursor were changed to a carbon nanotube (manufactured by Osaka Soda Co., Ltd.).

(Example 7)

A porous silicon carbide composite material 7 was obtained in substantially the same manner as in Example 1 except that the ketjen black (ECP-600JD) as a raw material and the ketjen black (ECP) mixed to the porous silicon carbide precursor were changed to graphene (manufactured by NiSiNa materials Co., Ltd.).

(Example 8)

A porous silicon carbide composite material 8 was obtained in substantially the same manner as in Example 4 except that the porous silicon carbide precursor was calcined at 1,400°C.

(Example 9)

A porous silicon carbide composite material 9 was obtained in substantially the same manner as in Example 8 except that 0.4 g of ketjen black (ECP) was used in the synthesis of a porous silicon carbide precursor, and 0.4 g of ketjen black (ECP) was not mixed to the porous silicon carbide precursor before calcined.

(Comparative Example 1)

A porous silicon carbide composite material 10 was obtained in substantially the same manner as in Example 1 except that urea was not used.

(Comparative Example 2)

A porous silicon carbide composite material 11 was obtained in substantially the same manner as in Example 1 except that the ketjen black (ECP-600JD) as a raw material was not used in the production of a porous silicon carbide precursor, and that the amount of the ketjen black (ECP) mixed to 1 g of the obtained porous silicon carbide precursor was changed to 0.3 g.

(Comparative Example 3)

A porous silicon carbide composite material 12 was obtained in substantially the same manner as in Example 4 except that the porous silicon carbide precursor was calcined at 1,600°C. The raw materials and conditions for the individual steps are shown in Table 1.

[Table 1]

| Category | Code | Material | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|---|
| Raw materials | D | 5 mM Aqueous solution of acetic acid | 6 | 6 | 6 | 6 | 6 | 6 | 6 | 6 | 6 | 6 | 6 | 6 |
| | C | F-127 | 0.8 | 0.8 | 0.8 | 0.8 | 0.8 | 0.8 | 0.8 | 0.8 | 0.8 | 0.8 | 0.8 | 0.8 |
| | E | Urea | 0.5 | 0.5 | 0.5 | 0.5 | 0.5 | 0.5 | 0.5 | 0.5 | 0.5 | 0 | 0.5 | 0.5 |
| | Carbon material (A) / B | Ketjen black | 0.24 | 0.24 | 0.24 | 0.24 | 0.24 | | | 0.24 | 0.4 | 0.24 | 0 | 0.24 |
| | | Carbon nanotube | | | | | | 0.24 | | | | | | |
| | | Graphene | | | | | | | 0.24 | | | | | |
| | R-Trialkoxysilane / A | Methyltrimethoxysilane | 5 | 5 | 5 | 2.5 | 2.5 | 5 | 5 | 2.5 | 2.5 | 5 | 5 | 2.5 |
| | | Phenyltrimethoxysilane | | | | 2.5 | | | | 2.5 | 2.5 | | | 2.5 |
| | | Vinyltrimethoxysilane | | | | | 2.5 | | | | | | | |
| | Carbon material (B) | Ketjen black | 0.4 | 0.6 | 0.4 | 0.4 | 0.4 | | | 0.4 | | 0.4 | 0.3 | 0.4 |
| | | Carbon nanotube | | | | | | 0.4 | | | | | | |
| | | Graphene | | | | | | | 0.4 | | | | | |
| Calcination step | Calcination temperature | °C | 1500 | 1500 | 1500 | 1500 | 1500 | 1500 | 1500 | 1400 | 1400 | 1500 | 1500 | 1600 |
| | Calcination time | hr | 2 | 2 | 2 | 2 | 2 | 2 | 2 | 2 | 2 | 2 | 2 | 2 |
| Heat treatment step | Temperature | °C | | | 600 | | | | | | | | | |
| | Time | hr | | | 2 | | | | | | | | | |

With respect to the above-mentioned Examples 1 to 9 and Comparative Examples 1 to 3, measurement was conducted in accordance with the methods described below.

[Measurement of a carbon material content]

A carbon material content was determined from a weight loss measured by a thermogravimetric differential thermal analysis (TG-DTA) in air in the temperature range of 600 to 800°C.

[Elemental analysis for the porous silicon carbide composite material]

Carbon (C) analysis: An analysis was conducted by a high-frequency combustion-infrared absorption method.
Apparatus: model CS844, manufactured by LECO Japan Corporation
Oxygen (O) analysis: An analysis was conducted by an inert-gas fusion-infrared absorption method.
Apparatus: model TCH600, manufactured by LECO Japan Corporation
Silicon (Si) analysis: A sample was fused and decomposed using sodium hydroxide and sodium peroxide, and then the fused sample was dissolved in hydrochloric acid and diluted with ultrapure water so as to have a predetermined volume, obtaining a solution to be tested, and the solution was subjected to ICP detection.

Apparatus: model ICPE-9820, manufactured by Shimadzu Corporation
From the Si, C, and O contents, the mass ratios [Si]/[C] and [Si]/[O] were determined.

[Measurement of a BET specific surface area, a pore volume, and a pore size]

0.04 g of the electrode catalyst or catalyst powder was weighed and placed in a sample tube, and subjected to pretreatment by vacuum drying at 100°C for 6 hours. After the pretreatment, using a specific surface area/pore distribution apparatus (apparatus name "BELSORP-miniII", manufactured by MicrotracBEL Corp.), nitrogen was adsorbed on the sample at -196°C while changing the relative pressure.

[Measurement of an electrical conductivity]

The electrode catalyst or catalyst powder was introduced into a powder resistivity measurement system (apparatus name "MCP-PD51", manufactured by Mitsubishi Chemical Analytech Co., Ltd.), and the sample was pressurized using the attached hydraulic pump, and, after the pressure had reached 12 kN, a resistivity was measured by a resistivity meter (apparatus name "Loresta GX", manufactured by Mitsubishi Chemical Analytech Co., Ltd.), and an electrical conductivity was calculated from the resistivity using the formula shown below. In Example 1, the resistivity was $6.6 \times 10^{-2}$ $\Omega$•cm, and the electrical conductivity was 15 S/cm. The results of the measurement are shown in Table 2.

$$\text{Electrical conductivity (S/cm)} = (\text{Resistivity } (\Omega\text{•cm}))^{-1}$$

[Table 2]

| | Elemental analysis | | | Average diameter ratio of SiC/C primary particles | BET Specific surface area $(m^2/g)$ | Pore size (nm) | Pore volume $(cm^3/g)$ | Resistivity $(\Omega\text{•cm})$ | Electrical conductivity (S/cm) |
|---|---|---|---|---|---|---|---|---|---|
| | Si (wt%) | C (wt%) | O (wt%) | | | | | | |
| Example 1 | 43 | 56 | 0.38 | 6 | 103 | 250 | 1.43 | 6.60E-02 | 15.2 |
| Example 2 | 33 | 66 | 0.32 | 6 | 129 | 266 | 1.57 | 4.70E-02 | 21.3 |
| Example 3 | 61 | 36 | 1.9 | 6 | 200 | 180 | 1.82 | 1.00E+00 | 1.0 |
| Example 4 | 38 | 61 | 0.33 | 10 | 90 | 150 | 1.25 | 2.70E-02 | 37.0 |
| Example 5 | 40 | 59 | 0.4 | 8 | 93 | 182 | 1.3 | 5.50E-02 | 18.2 |

(continued)

| | Elemental analysis | | | Average diameter ratio of SiC/C primary particles | BET Specific surface area ($m^2/g$) | Pore size (nm) | Pore volume ($cm^3/g$) | Resistivity ($\Omega \cdot cm$) | Electrical conductivity (S/cm) |
|---|---|---|---|---|---|---|---|---|---|
| | Si (wt%) | C (wt%) | O (wt%) | | | | | | |
| Example 6 | 54 | 45 | 0.4 | 1 | 105 | 200 | 1.15 | 9.00E-02 | 11.1 |
| Example 7 | 30 | 68 | 0.32 | 2 | 85 | 95 | 1.2 | 9.90E-01 | 1.0 |
| Example 8 | 41 | 58 | 0.4 | 1 | 195 | 90 | 1.11 | 1.54E-01 | 6.5 |
| Example 9 | 49 | 50 | 0.4 | 1 | 165 | 80 | 1.1 | 4.55E-01 | 2.2 |
| Comparative Example 1 | 45 | 55 | 0.31 | 8 | 10 | 5 | 0.25 | 1.00E+00 | 1.0 |
| Comparative Example 2 | 61 | 30 | 2 | 7 | 15 | 123 | 0.37 | 2.30E+06 | 4.4E-07 |
| Comparative Example 3 | 39 | 60 | 0.5 | 13 | 16 | ND | ND | 5.88E-02 | 17.1 |

As can be seen from Table 2, in Examples 1 to 9 in which the porous silicon carbide composite material contained silicon carbide (SiC) and a carbon material, it was found that the porous silicon carbide composite material had a BET specific surface area of 10 $m^2/g$ or more and an electrical conductivity of 0.1 S/cm or more, and thus a porous silicon carbide composite material having both high BET specific surface area and high electrical conductivity was obtained.

As an example, a scanning electron microscope image of the porous silicon carbide composite material 1 in Example 1 is shown in FIG. 2. It was found that silicon carbide having a particle diameter of about 200 nm and a carbon material having a particle diameter of about 40 nm had three-dimensionally developed, forming porous silicon carbide composite particles.

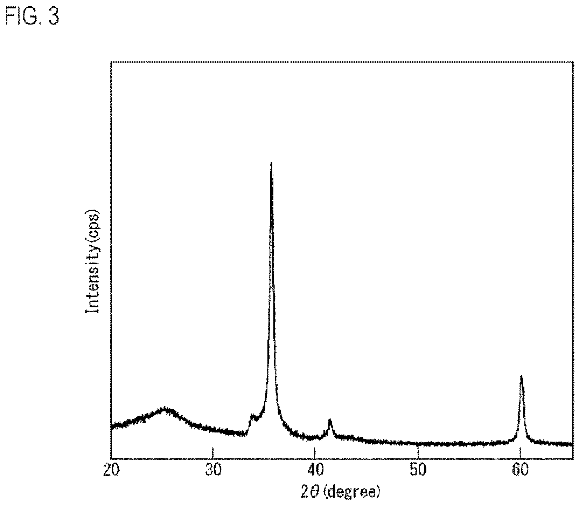

Further, an X-ray diffraction pattern of the porous silicon carbide composite material in Example 1 is shown in FIG. 3. In the crystal structure analysis by X-ray diffractometry (XRD), a peak ascribed to the (111) plane of 3C-SiC crystal structure was observed at around 20 = 36°, and a peak ascribed to the (220) plane of 3C-SiC crystal structure was observed at around 20 = 60°, and, from the above, it was found that a porous silicon carbide composite material having the same crystal structure as that of silicon carbide (3C-SiC) of cubic crystal was obtained.

In contrast, in Comparative Example 1, the BET specific surface area was 10 $m^2/g$, and the electrical conductivity was 1.0 S/cm, and thus a high value of electrical conductivity was obtained, but the specific surface area was small and poor.

In Comparative Example 2, the BET specific surface area was 15 $m^2/g$, but the electrical conductivity was $4.4 \times 10^{-7}$ S/cm, and thus the electrical conductivity was very poor.

In Comparative Example 3, the BET specific surface area was 16 $m^2/g$, and the electrical conductivity was 17.1 S/cm, and thus a high value of electrical conductivity was obtained, but the particle diameter ratio of the average diameter of the silicon carbide and the carbon material was as large as 13, and definite pores were not formed in the measuring range.

INDUSTRIAL APPLICABILITY

The porous silicon carbide composite material of the present embodiment has both higher BET specific surface area and high electrical conductivity, and therefore is advantageously used as a material for electrode for use in a catalyst layer of an electrode for a fuel cell.

Claims

1. A porous silicon carbide composite material comprising silicon carbide (SiC) and a carbon material,
the porous silicon carbide composite material having a BET specific surface area of 10 $m^2/g$ or more and having an electrical conductivity of 0.1 S/cm or more.

2. A porous silicon carbide composite material comprising:

    a porous silicon carbide composite material containing silicon carbide (SiC) and a carbon material (A), and a carbon material (B),
    the porous silicon carbide composite material having a BET specific surface area of $10\,m^2/g$ or more and having an electrical conductivity of 0.1 S/cm or more.

3. The porous silicon carbide composite material according to claim 1 or 2, which has a total pore volume of $0.3\,cm^3/g$ or more.

4. The porous silicon carbide composite material according to claim 1 or 2, which has a pore size of 10 to 1,000 nm.

5. The porous silicon carbide composite material according to claim 1, wherein the mass ratio of silicon (Si) to carbon (C) contained in the porous silicon carbide composite material ([Si]/[C]) is 0.4/1.0 to 2.0/1.0.

6. The porous silicon carbide composite material according to claim 2, wherein the mass ratio of silicon (Si) to carbon (C) contained in the porous silicon carbide composite material ([Si]/[C]) is 0.15/1.0 to 2.0/1.0.

7. The porous silicon carbide composite material according to claim 1, wherein the content of the carbon material (A) in the porous silicon carbide composite material is 5 to 50% by mass.

8. The porous silicon carbide composite material according to claim 2, wherein the total content of the carbon materials (A) and (B) in the porous silicon carbide composite material is 5 to 50% by mass.

9. The porous silicon carbide composite material according to claim 1 or 2, wherein the carbon material (A) and/or (B) contains one member or two or more members selected from carbon black, a carbon nanofiber, a carbon nanotube, and low-crystalline nanocarbon.

10. The porous silicon carbide composite material according to claim 1 or 2, wherein the particle diameter ratio of the average diameter of primary particles of the silicon carbide (SiC) and the average diameter of the carbon material is 10:1 to 1:5.

11. The porous silicon carbide composite material according to claim 1 or 2, wherein a domain containing a silicon oxide formed by oxidation of the silicon carbide (SiC) is formed in part of the composite material.

12. The porous silicon carbide composite material according to claim 11, wherein the domain containing a silicon oxide is formed on the surface of the silicon carbide (SiC) in the porous silicon carbide composite material.

13. The porous silicon carbide composite material according to claim 11 or 12, wherein the mass ratio of silicon (Si) to oxygen (O) contained in the porous silicon carbide composite material ([Si]/[O]) is 1/0.1 to 1/0.001.

14. An electrode for a fuel cell, the electrode having a layer containing the porous silicon carbide composite material according to claim 1 or 2.

15. A method for producing a porous silicon carbide composite material, comprising the steps of:

    (A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
    (B) cleaning the gel with an alcohol;
    (C-1) drying the cleaned gel to form a porous silicon carbide precursor; and
    (D-1) calcining the porous silicon carbide precursor to obtain a composite material including silicon carbide (SiC) and the carbon material (A).

16. A method for producing a porous silicon carbide composite material, comprising the steps of:

    (A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor; and
(D-1) calcining the porous silicon carbide precursor to obtain a composite material including silicon carbide (SiC) and the carbon material (A),
the method further comprising any of the steps shown in the following items (1) and (2):

(1) step (C-2) of further incorporating a carbon material (B) into the porous silicon carbide precursor obtained in the step (C-1); and
(2) step (D-2) of further incorporating a carbon material (B) into the porous silicon carbide composite material obtained in the step (D-1).

17. The method for producing a porous silicon carbide composite material according to claim 15 or 16, which further comprises, after the step (D-1) or (D-2), step (E-1) of subjecting the composite material to heat treatment in the presence of oxygen to form a domain containing a silicon oxide in part of the composite material.

18. The method for producing a porous silicon carbide composite material according to claim 15 or 16, wherein, in the step (D-1), the porous silicon carbide precursor is calcined at 1,300 to 3,000°C.

19. The method for producing a porous silicon carbide composite material according to claim 15 or 16, wherein the organic alkoxysilane is represented by the following formula (1) or (2):

$$R^1\text{-}SiR^2_x(OR^3)_{3-x} \qquad (1)$$

wherein $R^1$ is any one group selected from a methyl group, an ethyl group, a vinyl group, and a phenyl group, $R^2$ represents a methyl group, $R^3$ represents a methyl group or an ethyl group, and integer x is 0 or 1,

$$R^4\text{-}(SiR^5_y(OR^6)_{3-y})_2 \qquad (2)$$

wherein $R^4$ includes any one group selected from a methylene group, an ethylene group, a hexylene group, a vinylene group, a phenylene group, and a biphenylene group, $R^5$ represents a methyl group, $R^6$ represents a methyl group or an ethyl group, and integer y is 0 or 1.

20. The method for producing a porous silicon carbide composite material according to claim 15 or 16, wherein the mass ratio of the carbon material (A) or organic polymer and the organic alkoxysilane is 2.5 to 50:97.5 to 50.

21. The method for producing a porous silicon carbide composite material according to claim 15 or 16, wherein the carbon material (A) and/or (B) contains one member or two or more members selected from carbon black, a carbon nanofiber, a carbon nanotube, and low-crystalline nanocarbon.

22. The method for producing a porous silicon carbide composite material according to claim 20, wherein the organic polymer contains one member or two or more members selected from a phenolic resin, polystyrene, and poly-divinylbenzene.

## FIG. 1

STEP (A)
ADDING ORGANIC ALKOXYSILANE TO ACIDIC AQUEOUS SOLUTION CONTAINING SURFACTANT AND PH ADJUSTOR, AND FURTHER ADDING CARBON MATERIAL (A) OR ORGANIC POLYMER TO CAUSE SOL-GEL REACTION OF ORGANIC ALKOXYSILANE, FORMING GEL CONTAINING CARBON MATERIAL (A) OR ORGANIC POLYMER

STEP (B)
CLEANING GEL WITH ALCOHOL

STEP (C-1)
DRYING CLEANED GEL TO FORM POROUS SILICON CARBIDE PRECURSOR

STEP (D-1)
CALCINING POROUS SILICON CARBIDE PRECURSOR

## FIG. 2

100 nm

FIG. 3

## INTERNATIONAL SEARCH REPORT

| International application No. |
| --- |
| **PCT/JP2024/010264** |

**A. CLASSIFICATION OF SUBJECT MATTER**

*H01M 4/86*(2006.01)i; *C01B 32/977*(2017.01)i; *H01M 4/88*(2006.01)i; *H01M 4/96*(2006.01)i; *H01M 8/10*(2016.01)i; *C04B 35/571*(2006.01)n; *C04B 35/577*(2006.01)n

FI: H01M4/86 M; C01B32/977; H01M4/86 B; H01M4/88 K; H01M4/96 B; H01M8/10 101; C04B35/571; C04B35/577

According to International Patent Classification (IPC) or to both national classification and IPC

**B. FIELDS SEARCHED**

Minimum documentation searched (classification system followed by classification symbols)

H01M4/86; C01B32/977; H01M4/88; H01M4/96; H01M8/10; C04B35/571; C04B35/577

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2017/213057 A1 (SUMITOMO ELECTRIC INDUSTRIES, LTD.) 14 December 2017 (2017-12-14)<br>paragraphs [0011]-[0073], fig. 1-5 | 1-10 |
| A | paragraphs [0011]-[0073], fig. 1-5 | 11-22 |
| A | CN 113735108 A (SICHUAN XINGYAO NEW ENERGY TECHNOLOGY CO., LTD.) 03 December 2021 (2021-12-03)<br>paragraphs [0029]-[0109], fig. 1 | 1-22 |
| A | JP 2023-009699 A (KABUSHIKI KAISHA TOYOTA CHUO KENKYUSHO) 20 January 2023 (2023-01-20)<br>paragraphs [0016]-[0107], fig. 1-5 | 1-22 |
| A | JP 2010-149008 A (TOYOTA JIDOSHA KABUSHIKI KAISHA) 08 July 2010 (2010-07-08)<br>paragraphs [0023]-[0081], fig. 1-7 | 1-22 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/010264**

| Patent document cited in search report | | | Publication date (day/month/year) | Patent family member(s) | | | Publication date (day/month/year) |
|---|---|---|---|---|---|---|---|
| WO | 2017/213057 | A1 | 14 December 2017 | US 2018/0374657 A1 paragraphs [0022]-[0132], fig. 1-5 CN 108369870 A | | | |
| CN | 113735108 | A | 03 December 2021 | (Family: none) | | | |
| JP | 2023-009699 | A | 20 January 2023 | WO 2023/282036 A1 paragraphs [0016]-[0107], fig. 1-5 KR 10-2024-0049546 A CN 117651690 A | | | |
| JP | 2010-149008 | A | 08 July 2010 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023041000 A
- JP 2010149008 A
- JP 2012051748 A
- JP 2015155372 A